# EUROPÄISCHE PATENTANMELDUNG

(11) **EP 1 616 710 A1**
(43) Veröffentlichungstag der Anmeldung: **18.01.2006**
(21) Anmeldenummer: 04405404.7
(22) Anmeldetag: 01.07.2004
(51) Int. Cl.: B41M 7/00, B32B 27/16

(54) **Verfahren zur Herstellung eines Verpackungsmaterials**

(71) Anmelder: Alcan Technology & Management Ltd., 8212 Neuhausen am Rheinfall (CH)
(72) Erfinder: Nägeli, Hans-Rudolf, 8212 Neuhausen (CH); Hombach, Franz Peter, 8222 Beringen (CH)

(57) **Zusammenfassung**

Bei einem Verfahren zur Herstellung eines sterilisierbaren Verpackungsmaterials wird ein Film oder eine Folie bedruckt, die Bedruckung (11) mit einem Elektronenstrahl härtenden Material beschichtet und die Überzugsschicht (12) zum Aushärten des Beschichtungsmaterials mit Elektronen bestrahlt. Das Laminat eignet sich in besonderem Mass für die Fertigung von sterilisierbaren Verpackungen für Lebensmittel oder pharmazeutische Produkte. Die Laminatherstellung unter Verwendung Elektronenstrahl härtender Überzugsschichten führt zu einer wesentlich verminderten Durchlaufzeit sowie grösserer Flexibilität in der Produktion und zu einer Reduktion von Lösungsmittelemissionen beim Ersatz lösungsmittelbasierter Laminierungen durch Elektronenstrahl härtende Überzugslackierungen.

## Beschreibung

Die Erfindung betrifft ein Verfahren zur Herstellung eines sterilisierbaren Verpackungsmaterials mit einem Film oder einer Folie mit einer Bedruckung. Im Rahmen der Erfindung liegt auch ein aus dem Laminat hergestelltes sterilisierbaren Verpackungsmaterial für Lebensmittel- oder Pharma-Verpackungen.

Verpackungsmaterialien für sterilisierbare Beutel, Standbeutel oder Deckel für die Verpackung von Lebensmitteln oder pharmazeutischen Produkten oder für technische Anwendungen werden heute in einem mehrstufigen Laminierverfahren mit lösungsmittelfreien oder lösungsmittelbasierten Polyurethan (PUR)-Klebstoffen als mehrschichtige Laminate gefertigt.

Die Laminierschritte sind vor dem Laminieren mit dem/der nächstfolgenden Film/Folie jeweils während einer Zeitdauer bis zum vollständigen Aushärten der Klebstoffschicht zwischen den im vorangehenden Laminierschritt mit einander zu verklebenden Filmen/Folien unterbrochen. Zudem ist die Bedruckung des die Aussenseite bildenden Films zur Erzielung eines optisch ansprechbaren Druckbildes als Konterdruck auszuführen. Die typische endgültige Struktur ist: Polyethylenterephthalat (PET)-Film / Bedruckung (Konterdruck) / Klebstoff / PET-Film / Klebstoff / Polyolefin-Film als Siegelschicht. Nach dem abschliessenden Aushärten während mehreren Tagen kann das fertig gestellte Laminat zugeschnitten und an den Kunden verschickt werden. Die vom Auftragseingang bis zur Auslieferung des fertig konfektionierten Laminates benötigte Durchlaufzeit ist wesentlich von der Aushärtungsdauer der PUR-Klebstoffe abhängig.

Der Erfindung liegt die Aufgabe zugrunde, ein Verfahren der eingangs genannten Art bereitzustellen, mit welchem die bei Ausführung einer Bedruckung mittels Konterdruck erforderliche Aushärtungsdauer des für den nachfolgenden Laminierschritt benötigten Klebstoffes und damit die Durchlaufzeit gegenüber der herkömmlichen Laminatherstellung herabgesetzt werden kann.

Zur erfindungsgemässen Lösung der Aufgabe führt, dass der Film oder die Folie bedruckt, die Bedruckung mit einem Elektronenstrahl härtenden Material beschichtet und die Überzugsschicht zum Aushärten des Beschichtungsmaterials mit Elektronen bestrahlt wird.

Bei herkömmlichen Verfahren wird ein mittels Konterdruck bedruckter Film, der die Aussenseite des Verpackungsmaterials bildet, mit einem weiteren Film laminiert. Der wesentliche Kern des erfindungsgemässen Verfahrens liegt nun darin, den mittels Konterdruck bedruckten Film zu ersetzen durch einen Film mit normalem Oberflächendruck, den bedruckten Film mit einem Elektronenstrahl härtenden Material zu beschichten und die Überzugsschicht durch Elektronenstrahlhärten auszuhärten.

Die Strahlenhärtung von Elektronenstrahl härtenden Überzugsschichten und Klebstoffen erfolgt beim Durchlauf durch eine Bestrahlungsstation innerhalb von Sekundenbruchteilen, wobei die vollständige Aushärtung ohne zusätzliche Aushärtungsdauer im wesentlichen erreicht ist, wenn das Laminat aus der Bestrahlungsstation austritt und aufgewickelt wird.

Ein wesentlicher Vorteil des erfindungsgemässen Verfahrens liegt in der erhöhten Leistungsfähigkeit der Verpackungsmaterialproduktion, da das Vorlaminat in grosser Menge hergestellt und nachfolgend individuell bedruckt und mit einer Überzugsschicht versehen werden kann. Dadurch erhöht sich auch die Flexibilität der Produktionsanlagen, da kleinere Materialchargen, wie sie heute vermehrt kurzfristig bestellt werden, wirtschaftlicher hergestellt werden können.

Die mit dem erfindungsgemässen Verfahren hergestellten Laminate entsprechen der Struktur: Überzugschicht aus einem Elektronenstrahl härtenden Material / Bedruckung / Vorlaminat. Beispiele von Vorlaminaten mit Barriere- und/oder Siegelschichten sind etwa
- PET-Film / Barriereschicht (z.B. SiOₓ) / Klebstoff / Polyolefin-Film
- Aluminiumfolie / Klebstoff / Siegelschicht

Weiter entwickelte, mit dem erfindungsgemässen Verfahren hergestellte Laminate entsprechen der Struktur: Überzugschicht aus einem Elektronenstrahl härtenden Material / Bedruckung mit Elektronenstrahl härtender Druckfarbe / Vorlaminat. Hier wird die Technologie des Elektronenstrahlhärtens von Druckfarben zusätzlich zum Elektronenstrahlhärten der Überzugsschicht eingesetzt.

Die erfindungsgemäss angewendete neue Technologie ersetzt Strukturen wie
- PET-Film / Druckfarbe / Klebstoff / PET-Film / Klebstoff / Polyolefin-Film
- PET-Film / Druckfarbe / Klebstoff / PET-Film / Barriereschicht (z.B. SiOₓ) / Klebstoff / Polyolefin-Film
- PET-Film / Druckfarbe / Klebstoff / Aluminiumfolie / Klebstoff / Siegelschicht

Bevorzugt ist das Elektronenstrahl härtende Beschichtungsmaterial ein Material auf Acrylatbasis ist.

Das Beschichtungsmaterial auf Acrylatbasis kann Monomere, Oligomere oder Mischungen von Monomeren und Oligomeren als Basiseinheiten enthalten. Beispiele von Monomeren sind mono-, di und multifunktionale Acrylate, wie Phosphorsäureesteracrylate, Hydroxyacrylate, Carboxyacrylate, Aminoacrylate, Acrylsäure und Acrylamid. Beispiele von Oligomeren sind Epoxyacrylate, Urethanacrylate, Polyesteracrylate, Siliconacrylate und Silanacrylate. Die erwähnten Monomeren und Oligomeren sind entweder im Handel erhältlich oder können mit Routineverfahren hergestellt werden. Der hier verwendete Begriff "Acrylat" (oder "Acryl") umfasst auch "Methacrylat" (oder "Methacryl"), wobei die Acrylate bevorzugt sind.

Bevorzugt werden die Überzugsschichten aus einem Elektronenstrahl härtenden Klebstoff bei einer Hochspannung von 50 bis 125 kV, insbesondere 70 bis 100 kV, mit auf die Oberfläche des Laminates gerichteten Elektronenstrahlen mit einer Strahlendosis von 10 bis 50 kGy, vorzugsweise 20 bis 40 kGy, ausgehärtet.

Bevorzugt weist das Laminat zwei Filme oder Folien und eine Klebstoffschicht aus einem Elektronenstrahl härtenden Klebstoff auf.

Bevorzugte Laminate weisen die folgenden Strukturen auf:
- Überzugsschicht aus einem Elektronenstrahl härtenden Material / Bedruckung / PET-Film / Barriereschicht / Klebstoffschicht / Polyolefin-Film.
- Überzugsschicht aus einem Elektronenstrahl härtenden Material / Bedruckung / Aluminiumfolie / Klebstoffschicht / Polyolefin-Film.
- Überzugsschicht aus einem Elektronenstrahl härtenden Material / Elektronenstrahl härtende Bedruckung / PET-Film / Barriereschicht / Klebstoffschicht / Polyolefin-Film.
- Überzugsschicht aus einem Elektronenstrahl härtenden Material / Elektronenstrahl härtende Bedruckung / Aluminiumfolie / Klebstoffschicht / Polyolefin-Film.

Bevorzugte Polyolefin-Filme sind siegelfähige Filme aus Polyethylen (PE) oder Polypropylen (PP). Für sterilisierfähige oder kochfeste Anwendungen ist PP wegen seiner höheren thermischen Belastbarkeit zu bevorzugen.

Die als Sperrschicht gegen Gase, Dämpfe und Feuchtigkeit dienende Barriereschicht kann durch eine Metallfolie, beispielsweise eine Aluminiumfolie, gebildet sein. Andere geeignete Materialien für Sperrschichten sind beispielsweise Filme aus Kunststoffen, wie Polyvinylidenchlorid (PVDC) oder Ethyl-Vinylalkohol-Copolymer (EVOH), oder eine Schicht aus keramischen Materialien, wie Silizium- oder Aluminiumoxid bzw. -nitrid, die in dünner Schicht, z.B. im Bereich von 10 - 500 nm, im Vakuum auf die Trägerfolie abgeschieden werden. Beispiele weiterer Sperrschichten sind metallische Schichten, z.B. aus Aluminium.

Im vorliegenden Fall ist auch eine Metallisierung geeignet, dem PET-Film und damit der Verpackungsfolie Barriereeigenschaften zu verleihen, welche den Durchtritt von Flüssigkeiten, Gasen, Dämpfen, Wasserdampf, Aromen oder Geruchsstoffen verhindern. Eine bevorzugte Metallisierung besteht aus Aluminium, welches beispielsweise durch Sputtern oder durch Abscheidung aus dem Vakuum in einer Dicke von etwa 10 nm bis etwa 2 µm auf den PET-Film aufgetragen wird.

Das erfindungsgemäss hergestellte Laminat eignet sich in besonderem Mass als sterilisierbares Verpackungsmaterial für Lebensmittel- oder Pharma-Verpackungen wie Beutel, Standbeutel und Deckel sowie für technische Anwendungen wie Zierstreifen für Automobile oder Batteriepackungen.

Weitere Vorteile, Merkmale und Einzelheiten ergeben sich aus der nachfolgenden Beschreibung bevorzugter Ausführungsbeispiele sowie anhand der Zeichnung; diese zeigt schematisch in
- Fig. 1 den Querschnitt durch eine erste laminierte und bedruckte Verpackungsfolie;
- Fig. 2 den Querschnitt durch eine zweite laminierte und bedruckte Verpackungsfolie;
- Fig. 3 die Herstellung einer bedruckten Verpackungsfolie aus einem Vorlaminat.

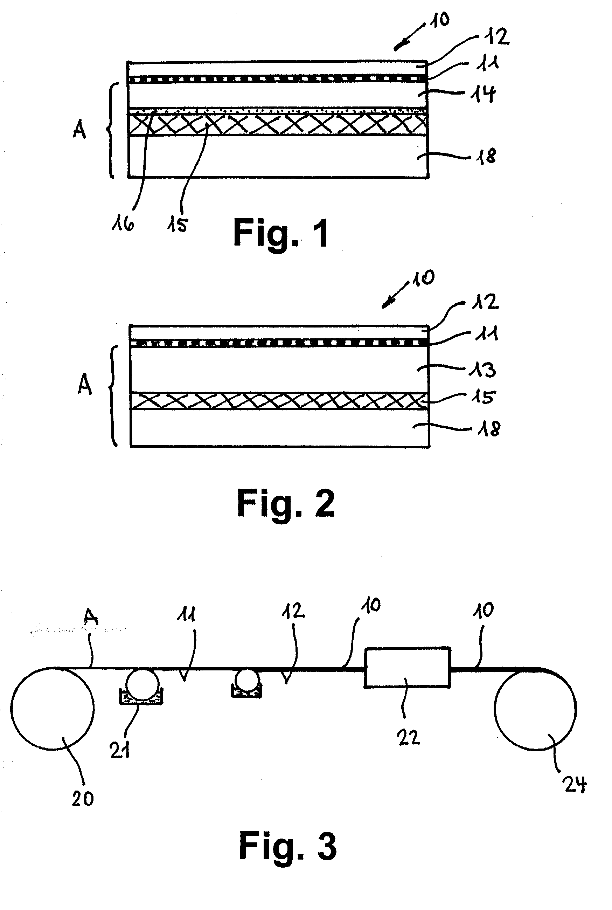

Eine in Fig. 1 gezeigte sterilisierbare Verpackungsfolie 10 zur Herstellung von Lebensmittel- oder Pharma-Verpackungen weist einen PET-Film 14 als Aussenseite und einen siegelfähigen PE- oder PP-Film 18 als Innenseite auf. Der PET-Film 14 weist auf einer seiner Oberflächen eine Bedruckung 11 mit einer Überzugsschicht 12, auf der anderen Oberfläche eine Barriereschicht 16 aus beispielsweise SiOₓ auf. Der aussenseitige PET-Film 14 ist mit seiner mit der Barriereschicht 16 versehenen Seite über eine Klebstoffschicht 15 mit dem innenseitigen Siegelfilm 18 permanent verbunden. Bei einer typischen Verpackungsfolie 10 beträgt die Dicke des PET-Films beispielsweise 12 µm, die Dicke der PP-Siegelschicht etwa 30 µm.

Eine in Fig. 2 gezeigte Variante einer sterilisierbaren Verpackungsfolie 10 zur Herstellung von Lebensmittel- oder Pharma-Verpackungen zeigt den gleichen Aufbau wie die in Fig. 1 gezeigte Folie mit der Ausnahme, dass anstelle des mit einer Barriereschicht 16 versehenen PET-Films 14 als Aussenseite eine Aluminiumfolie 13 verwendet wird. Bei einer typischen Verpackungsfolie 10 beträgt die Dicke der Aluminiumfolie beispielsweise etwa 8-12 µm, die Dicke der PP-Siegelschicht etwa 30 µm.

Die Überzugsschicht 12 besteht aus einem Elektronenstrahl härtenden Material, beispielsweise auf Acrylatbasis. Die für die Bedruckung 11 eingesetzte Druckfarbe oder Tinte kann eine herkömmliche Druckfarbe oder Tinte sein. Die Bedruckung kann aber ebenfalls aus einem Elektronenstrahl härtenden Material bestehen.

Bei der Herstellung der bedruckten Verpackungsfolie 10 wird üblicherweise von einem Vorlaminat A (siehe Fig. 1 und 2) ausgegangen. Das mit bekannten Verfahren als Band hergestellte Vorlaminat A gemäss Fig. 3 wird als Band von einer ersten Wickelrolle 20 abgewickelt und in einer oder mehreren hintereinander angeordneten Druckstationen 21 kontinuierlich bedruckt. Nachfolgend wird die Bedruckung 11 auf dem Vorlaminat A mit einer Überzugsschicht 12 aus einem Elektronenstrahl härtenden Material beschichtet. Das bedruckte und beschichtete Vorlaminat A durchläuft eine Bestrahlungsstation 22, in welcher die Überzugsschicht 12 und gegebenenfalls die Druckfarbe, falls diese ebenfalls aus einem Elektronenstrahl härtenden Material besteht, in einem Bruchteil einer Sekunde durch Elektronenstrahlhärtung aushärtet. Nach dem Austritt aus der Bestrahlungsstation 22 wird die fertige Verpackungsfolie 10 auf eine zweite Wickelrolle 24 aufgewickelt.

## Patentansprüche

1. Verfahren zur Herstellung eines sterilisierbaren Verpackungsmaterials mit einem Film oder einer Folie mit einer Bedruckung,
**dadurch gekennzeichnet, dass**
die Bedruckung (11) mit einem Elektronenstrahl härtenden Material beschichtet und die Überzugsschicht (12) zum Aushärten des Beschichtungsmaterials mit Elektronen bestrahlt wird.

2. Verfahren nach Anspruch 1, **dadurch gekennzeichnet, dass** das Elektronenstrahl härtende Beschichtungsmaterial ein Material auf Acrylatbasis ist.

3. Verfahren nach Anspruch 1 oder 2, **dadurch gekennzeichnet, dass** die Überzugsschicht (12) aus einem Elektronenstrahl härtenden Material bei einer Hochspannung von 50 bis 125 kV, vorzugsweise 70 bis 100 kV, mit auf die Oberfläche des Verpackungsmaterials gerichteten Elektronenstrahlen mit einer Strahlendosis von 10 bis 50 kGy, vorzugsweise 20 bis 40 kGy, ausgehärtet wird.

4. Verfahren nach einem der Ansprüche 1 bis 3, **dadurch gekennzeichnet, dass** das Verpackungsmaterial wenigstens zwei über wenigstens eine Klebstoffschicht (15) zu einem mehrschichtigen Laminat (10) verbundene Filme (14,18) oder Folien (13) aufweist.

5. Verfahren nach Anspruch 4, **dadurch gekennzeichnet, dass** das Laminat (10) zwei Filme (14,18) oder Folien (13) und eine Klebstoffschicht (15) aus einem Elektronenstrahl härtenden Klebstoff aufweist.

6. Verfahren nach Anspruch 5, **dadurch gekennzeichnet, dass** das Laminat (10) die folgende Struktur aufweist: Überzugsschicht (12) aus einem Elektronenstrahl härtenden Material / Bedruckung (11) / PET-Film (14) / Barriereschicht (16) / Klebstoffschicht (15) / Polyofefin-Film (18).

7. Verfahren nach Anspruch 5, **dadurch gekennzeichnet, dass** das Laminat (10) die folgende Struktur aufweist: Überzugsschicht (12) aus einem Elektronenstrahl härtenden Material / Bedruckung (11) / Aluminiumfolie (13) / Klebstoffschicht (15) / Polyolefin-Film (18).

8. Verfahren nach Anspruch 5, **dadurch gekennzeichnet, dass** das Laminat (10) die folgende Struktur aufweist: Überzugsschicht (12) aus einem Elektronenstrahl härtenden Material / Elektronenstrahl härtende Bedruckung (11) / PET-Film (14) / Barriereschicht (16) / Klebstoffschicht (15) / Polyolefin-Film (18).

9. Verfahren nach Anspruch 5, **dadurch gekennzeichnet, dass** das Laminat (10) die folgende Struktur aufweist: Überzugsschicht (12) aus einem Elektronenstrahl härtenden Material / Elektronenstrahl härtende Bedruckung (11) / Aluminiumfolie (13) / Klebstoffschicht (15) / Polyolefin-Film (18).

10. Verfahren nach einem der Ansprüche 1 bis 9, **dadurch gekennzeichnet, dass** der Polyolefin-Film (18) ein PE- oder PP-Film ist.

11. Sterilisierbares Verpackungsmaterial für Lebensmittel- oder Pharma-Verpackungen, aus einem Laminat (10) hergestellt mit dem Verfahren nach einem der Ansprüche 1 bis 10.
